# EUROPÄISCHE PATENTSCHRIFT

(11) **EP 1 957 955 B1**
(45) Veröffentlichungstag und Bekanntmachung des Hinweises auf die Patenterteilung: **23.12.2009**
(21) Anmeldenummer: 06818898.6
(22) Anmeldetag: 29.11.2006
(51) Int. Cl.: G01N 15/02, G01N 5/00

(54) **IMPAKTOR, INSBESONDERE ZUR FEINSTAUBMESSUNG**
IMPACTOR, IN PARTICULAR FOR MEASURING FINE DUST
IMPACTEUR, EN PARTICULIER POUR LA MESURE DE FINES POUSSIERES

(30) Priorität: 29.11.2005 DE 102005056718
(43) Veröffentlichungstag der Anmeldung: 20.08.2008
(73) Patentinhaber: Georg-August-Universität Göttingen, 37073 Göttingen (DE)
(72) Erfinder: GÜTHOFF, Friedrich, 37073 Göttingen (DE)
(74) Vertreter: Rehberg Hüppe + Partner
(86) Internationale Anmeldenummer: PCT/EP2006/011444
(87) Internationale Veröffentlichungsnummer: WO 2007/062818

(56) Entgegenhaltungen:
- EP-A- 1 316 796
- EP-A2- 1 251 344
- WO-A2-2005/015171
- US-A- 3 653 253
- US-A- 3 715 911

## Beschreibung

Die Erfindung betrifft einen Impaktor mit den Merkmalen des Oberbegriffs des Patentanspruchs 1. Ein solcher Impaktor kann Insbesondere zur Feinstaubmessung verwendet werden. Er ist aber ganz allgemein zur Messung der Konzentration von Tallchan bestimmter Partikelkiassen in Suspensionen aus einem Fluid und darin suspendierten Teilchen geeignet. Bel einem gasförmigen Fluid können die Teilchen nicht nur fest, sondern auch flüssig sein. In jedem Fall müssen die Teilchen eine signifikant größere Dichte als das Fluid aufweisen, was zwar bei einem gasförmigen Fluid generall der Fall sein wird, aber bei einem flüssigen Fluid zu überprüfen ist.

### STAND DER TECHNIK

Impaktoren sind bekannte Vorrichtungen zur Partikelklassen-abhängigen Messung von Aerosolen, wie beispielsweise bei der Bestimmung der Feinstaubbelastung von Luft. Bei der Feinstaubbelastung von Luft geht es insbesondere um Teilchen in der Luft, die eine Teilchengröße von unterhalb 10 µm aufweisen. Um derartige Teilchen Partikelkiassen-selektiv abzuscheiden, wird die Luft durch eine Klassierdüse geführt, vor der eine Prallplatte angeordnet ist. Auf der Prallplatte scheiden sich die Teilchen ab, die aufgrund Ihrer größeren Trägheit dem der Prallplatte ausweichenden Luftstrom nicht folgen können, sondern Ihre Austrittsrichtung aus der Klassierdüse auf die Prallplatte hin zumindest im Wesentliches beibehalten. Die Partikelklasse der Teilchen, die sich auf der Prallplatte abscheiden, hängt von der Strömungsgeschwindigkeit der Luft durch die Klassierdüse, der Form der Klasaierdüse, insbesondere ihrem Durchmesser, und der Form sowie des Abstands der Prallplatte vor der Klasslerdüse ab. Wenn mehrere derartige Anordnungen aus einer Klessierdüse und einer Prallplatte in Reihe geschaltete werden; spricht man von einem Kaskadenimpaktor, bei dem die einzelnen Stufen so auszubilden sind, dass nacheinander immer feinere Teilchen auf den Prallplatten abgeschieden werden. Die Bestimmung der Masse der abgeschiedenen Teilchen einer bestimmten Partikelklasse erfolgt bei einem herkömmlichen Impaktor, indem vor Beginn und nach der Sammlung die Masse jeder Prallplatte exakt bestimmt wird und eine Massendifferenz der Masse der abgeschiedenen Teilchen zugeordnet wird. Dabei besteht jedoch die Gefahr, dass sich die Masse der Prallplatte selbst beispielsweise durch Verunreinigungen bei ihrem Ein- oder Ausbau in den bzw. aus dem Impaktor ändert oder dass auf der Prallplatte zunächst abgeschiedene Teilchen beim Ausbau der Prallplatte aus dem Impaktor wieder herabfallen und so nicht in die Massendifferenz eingehen. Außerdem ist es nahezu unmöglich, den zeitlichen Verlauf des Anfalls der Teilchen in der betrachteten Suspension zu erfassen oder überhaupt sehr kurzfristig zu Messergebnisse zu kommen.

Aus der Zeitschrift Rev. Sci. Instrum. 15/4, 516, (1980) ist ein Kaskadenimpaktor bekannt, bei dem in jeder Impaktorstufe die Abscheiderate der Teilchen in Form eines Elektrometerstroms gemessen wird. Voraussetzung hierfür ist jedoch, dass die Teilchen vorher gleichmäßig elektrisch aufgeladen wurden.

Aus der Zeitschrift Staub. Reinhalt. Luft, Band 37, Nr. 9, 335, (1977) ist ein Doppelstufenimpaktor mit einer photoelektrischen Messeinrichtung bekannt, die in jeder Impaktorstufe die Dichte der auf der Prallplatte abgeschiedenen Teilchen mittels Lichtextinktion misst.

Aus der DE 43 13 238 C2 ist ein Kaskadenimpaktor bekannt, bei dem vor und hinter jeder Impaktorstufe die Aerosolkonzentration gemessen wird und aus der Differenz der beiden zu einer Impaktorstufe gehörenden Messwerte die Menge der in der Impaktorstufe abgeschiedenen Teilchen bestimmt wird.

Mit den drei zuletzt beschriebenen Impaktoren ist zwar grundsätzlich die Erfassung eines zeitlichen Verlaufs von in einer bestimmten Partikelklasse innerhalb einer Suspension anfallenden Teilchen bestimmbar. Die Impaktoren arbeiten jedoch sämtlich relativ ungenau, da sie die typischerweise kleine Masse der in einer Impaktorstufe abgeschiedenen Teilchen nur indirekt und mit vergleichsweise großem Fehler bestimmen.

Aus der WO 94/29716 ist eine Vorrichtung zur Bestimmung von in Luft enthaltenen Teilchen verschiedener Partikelklassen bekannt, bei der die Luft parallel durch Luftfilter mit verschiedenen Abscheidegrenzen gesaugt wird. Jedes Luftfilter ist dabei auf einem für Biegeschwingungen elastischen Ansaugrohr gelagert. Die Eigenfrequenz jeder elastischen Anordnung aus Luftfilter und Ansaugrohr ist von der Masse der in dem Luftfilter abgeschiedenen Teilchen abhängig. Bei der bekannten Vorrichtung ist eine optische Messanordnung zur Bestimmung dieser Eigenfrequenz vorgesehen, um die Masse der in jedem Luftfilter abgeschiedenen Teilchen fortlaufend zu erfassen. Aufgrund der relativ niedrigen Eigenfrequenz mit für die optische Erfassung relativ großen Amplituden der Schwingung des jeweiligen Luftfilters weist auch diese bekannte Vorrichtung keine hohe Genauigkeit bei der Bestimmung der Masse der in den einzelnen Partikelklassen anfallenden Teilchen auf. Zudem ist der Aufbau der bekannten Vorrichtung sehr platzintensiv, insbesondere wenn der Anfall von Teilchen in verschiedenen Partikelklassen bestimmt werden soll. Eine Kaskadierung ist nicht möglich, sondern die einzelnen Luftfilter müssen parallel auf jeweils eigenen elastischen Ansaugrohren gelagert werden, wobei jede einzelne elastische Anordnung vergleichsweise große Abmessungen aufweist.

Zur Bestimmung kleiner Massen sind sogenannte Quarzwaagen bekannt, bei denen die Eigenfrequenz eines Schwingquarzes bzw. die Änderung der Eigenfrequenz eines Schwingquarzes durch Erhöhung seiner Masse aufgrund der zu wägenden Masse beobachtet und ausgewertet wird.

Aus "Quarz Crystal Micro Balance Arrays" (http://www.sandia.gov/mstc/technologies/microsensors/quartzcyrstalmicro.html) ist es bekannt, einen Schwingquarz zur Beobachtung der Belastung von Wasser mit Fremdstoffen zu verwenden. Abhängig von einer Beschichtung des Schwingquarzes beispielsweise mit einem Polymer, ändert sich dessen Eigenfrequenz mit dem Vorhandensein bestimmter Fremdstoffe in dem Wasser, in das er eingetaucht wird. Die Änderung weist dabei einen Zeitverlauf auf, über den sich ein Gleichgewicht der Fremdstoffe an bzw. in Beschichtung der Schwingquarze einzustellen scheint.

Aus "Miniature Airborne Particle Mass Monitors" (http://www.Iblgov/tech-Transfer/techs/Ibnl1850.html) ist eine Vorrichtung bekannt, bei der durch Thermophorese Teilchen aus Luft auf einem Schwingquarz einer Quarzwaage abgeschieden werden, um ihre Masse zu erfassen. Es ist nicht zu erkennen, wie dabei eine Klassierung der Teilchen in eine bestimmte Partikelklasse oder die Zuordnung der angefallenen Teilchen zu einem bestimmten Luftvolumen erfolgen soll.

Ein Impaktor mit den Merkmalen des Oberbegriffs des unabhängigen Patentanspruchs ist beispielsweise aus der US 3,715,911 A bekannt. Zur Lagerung des Schwingquarzes des bekannten Impaktors werden hier keine näheren Eingaben gemacht.

Bei einem aus der US 3,653,253 A bekannten Impaktor mit den Merkmalen des Oberbegriffs des unabhängigen Patentanspruchs 1 ist für den Schwingquarz ein einfaches Auflager unterhalb der Klassierdüse vorgesehen,

Aus GB 2 080 532 ist ein Schwingquarz zur Messung von Schichtdicken mit einer Halterung mit federnd abgestützten Halteelementen bekannt.

### AUFGABE DER ERFINDUNG

Der Erfindung liegt die Aufgabe zugrunde, einen Impaktor mit den Merkmalen des Oberbegriffs des unabhängigen Patentanspruchs 1 aufzuzeigen, bei dem der Schwingquarz mit geringem konstruktiven Aufwand eindeutig gelagert ist, ohne seine Schwingfähigkeit oder seine Funktion als von dem wesentlichen Teil einer Suspension ungehindert überströmte Prallplatte eines Impaktors zu beeinträchtigen, und so dass eine Anlage an allen Widerlagern ohne Verspannung des Schwingquarzes gewährleistet ist.

### LÖSUNG

Die Aufgabe der Erfindung wird durch einen Impaktor mit den Merkmalen des unabhängige Patentanspruchs 1 gelöst. Bevorzugte Ausführungsformen des neuen Impaktors sind in den abhängigen Ansprüchen 2 bis 8 definiert.

### BESCHREIBUNG DER ERFINDUNG

Bei dem neuen Impaktor weist die Prallplatte einen Schwingquarz auf, mit dem Ihre Masseänderung aufgrund der aufgefangenen Teilchen in situ messbar ist. Bei dem neuen Impaktor ist also direkt die Prallplatte als Waagschale einer Quarzwaage ausgebildet. Mit dieser Quarzwaage kann trotz der Anströmung der Prallplatte durch die aus der Klassierdüse austretende Suspension die Masse der aufgefangenen Teilchen so hoch aufgelöst werden, dass ein aktueller Massestrom der Teilchen der Interessierenden Partikelklasse genau erfasst werden kann. Es können auch mehrere voneinander unabhängige Messvorgänge, in denen Jeweils die über einen gewissen Zeitraum auf der Prallplatte abgeschiedene Teilchenmenge zu erfassen ist, ohne Unterbrechung zur Entnahme der Prallplatte für eine externe Zwischenwägung direkt hintereinander durchgeführt werden, Die Endmasse der Prallplatte am Ende eines vorhergehenden Messvorgangs ist die Anfangsmasse der Prallplatte bei dem darauf folgenden Messvorgang. Weiterhin ist auch keine über das normale Maß hinausgehende Wertung des neuen Impaktors erforderlich, um dessen Funktion über längere Zeiträume ununterbrochen zu gewährleisten. Selbst wenn beispieisweise bei sehr hoher Beladung der Prallplatte zunächst abgeschiedene Teilchen der interessierenden

Partikelklasse wieder von der Prallplatte herabfallen, so wird dies durch die damit einhergehende punktuelle Masseänderung der Prallplatte erkannt und kann entsprechend korrigiert werden. Lose Partikel wie Staub oder Flusen beeinflussen das Messergebnis bei dem neuen Impaktor nicht, da sie nicht an den Schwingquarz ankoppeln und so seine Eigenfrequenz nicht erhöhen. Zur Reinigung der Prallplatte des Impaktors von zuvor aufgefangenen Teilchen, reicht es aus, diese mit einem Lappen und einem einfachen Lösungsmittel vorsichtig abzuwischen. Weder dabei noch während der Messung auftretende Feuchtigkeit beeinträchtigt das Messergebnis, da der Schwingquarz im Gegensatz zu beispielsweise Filterpapier gegenüber Feuchte inert ist, Wenn der Schwingquarz dennoch ausfallen sollte, was aufgrund seines Verhaltens bei der Messung sofort erkannt würde, kann der problemios ausgetauscht werden. Die aktuelle Güte des Schwingquarzes kann beispielsweise In Form der Schärfe seiner Eigenfrequenz bestimmt werden. Dabei kann ein auftretender Verlust an Schärfe zunächst als Hinweis darauf gewertet werden, dass der Schwingquarz gereinigt werden muss, Bei einem nach einer Reinigung verbleibenden Schärfeverlust kann der Schwingquarz auszutauschen sein, was bei dem neuen impaktor jedoch nur seiten der Fall ist.

Um den Schwingquarz mit geringem konstruktivem Aufwand eindeutig zu lagem, ohne seine Schwingfähigkeit oder seine Funktion als von dem wesentlichen Tell einer Suspension ungehindert überströrnte Prallplatte eines impaktors zu beeinträchtigen, wird er in einzelnen Punkten an seinem Rand mit Federn abgestützten Halteelementen gegen ortsfeste flache Widerlager gehalten, wobei der Schwingquarz in drei um seine normale Symmetrieachse rotationssymmetrisch zueinander angeordneten Punkten gehalten wird. In diesem Fall ist eine Anlage an allen Widerlagern ohne Verspannung des Schwingquarzes gewährieistet.

Bei dem neuen Impaktor ist es nicht erforderlich, dass der Schwingquarz mit einer speziellen Beschichtung versehen ist. Vielmehr kann die Prallplatte unmittelbar aus dem Schwingquarz bestehen.

Der Schwingquarz kann schelbenförmig sein, und um eindeutige Messverhältnisse zu gewährielsten, sollte er mit seiner zu seinen Hauptflächen normal verlaufenden Symmetrieschse auf die Klassierdüse ausgerichtet sein.

Zur Abfrage der aktuellen Masse der Prallplatte des neuen Impaktors kann eine Messeinrichtung vorgesehen sein, die eine Eigenfrequenz des Schwingquarzes mit einem Abfragesignal ausliest, das eine sich ändernde Frequenz aufweist und mit dem der Schwingquarz elektrisch zu Schwingungen angeregt wird. Ein solches Abfragesignal wird auch als Sweep-Signal bezeichnet. Die Antwort auf das Abfragesignal ist das Resonanzverhalten des Schwingquarzes, wobei die Frequenz des Abfragesignals von Interesse ist, bei der das Antwortsignal des Schwingquarzes eine Resonanzüberhöhung aufweist.

Die Messeinrichtung kann insbesondere auch dazu vorgesehen sein, die Eigenfrequenz des Schwingquarzes oder eine Änderung dieser Eigenfrequenz oder die entsprechende Masseänderung der Prallplatte bzw. der auf ihr aufgefangenen Teilchen fortlaufend aufzuzeichnen. Dabei kann sie eine Korrektur in Bezug auf plötzliche Masseverringerungen vornehmen, die wie bereits oben angesprochen wurde, darauf beruhen können, dass zu der interessierenden Partikelklasse gehörende Teilchen wieder von der Prallplatte herabfallen.

Vorzugsweise weist der neue Impaktor mehrere Impaktorstufen mit jeweils einer Klassierdüse und einer einen Schwingquarz aufweisenden Prallplatte in Reihenschaltung auf, wobei die Prallplatten der verschiedenen Impaktorstufen für das Auffangen von Teilchen verschiedener Partikelklassen vorgesehen sind. Hierzu reicht es aus, die Durchmesser der Klassierdüsen, deren Länge oder deren Abstand zu den Prallplatten unterschiedlich auszugestalten. Alle anderen Bestandteile der Impaktorstufen neben den Klassierdüsen können beispielsweise vollständig identisch ausgebildet sein.

Wenn der neue Impaktor als ein solcher so genannter Kaskadenimpaktor ausgebildet ist, ist es besonders bevorzugt, wenn jede Impaktorstufe als ein auswechselbares Impaktormodul ausgebildet ist. So kann im Falle eines Ausfalls einer Impaktorstufe diese rasch ersetzt werden. Überdies können verschiedene Impaktorstufen beliebig zu einem Kaskadenimpaktor zusammengestellt werden, oder es kann eine einzelne, für den jeweiligen Anwendungsfall ausreichende Impaktorstufe separat zum Einsatz kommen.

Neben den Impaktorstufen weist der neue Impaktor typischerweise einen Fluideinlass und einen Absaugstutzen an seinem Ausgang auf. An den Absaugstutzen wird eine Absaugpumpe angeschlossen, die einen möglichst konstanten Volumenstrom durch den Impaktor bereitstellt.

Es ist günstig, wenn jedes auswechselbare Impaktormodul zugleich auch einen Abschnitt einer die Suspension führenden Wandung des Impaktors ausbildet. Zudem kann jedes Impaktormodul aus zwei Untereinheiten aufgebaut sein, von denen sich nur die Untereinheit mit der Klassierdüse zwischen den einzelnen Impaktormodulen unterscheidet, während die Untereinheit mit der den Schwingquarz umfassenden Prallplatte auch über verschiedene Impaktorstufen für verschiedene Partikelklassen hinweg identisch sein kann.

Die schnelle Verfügbarkeit von Messergebnissen bei dem neuen Impaktor kann dazu genutzt werden, den Betrieb des Impaktors, insbesondere in Bezug auf die durch ihn strömende Menge an Fluid - sowohl pro Zeiteinheit als auch absolut -, zu steuern. So kann die Fluidmenge erhöht werden, wenn die Massezunahme der Prallplatten keinen Mindestwert erreicht und umgekehrt. Eine erwartete, aber nicht beobachtete Massezunahme bzw. Veränderung der Massezunahme mit der Fluidmenge kann zudem als Hinweis auf eine Störung des neuen Impaktors ausgwertet werden. Auch eine Eichung des neuen Impaktors beispielsweise unter Verwendung von Aerosolen bekannter Zusammensetzung wird durch die schnelle Verfügbarkeit seiner Messergebnisse beschleunigt.

Vorteilhafte Weiterbildungen der Erfindung ergeben sich aus den Patentansprüchen, unter Berücksichtigung der Beschreibung und der Zeichnungen. Weitere Einzelheiten sind den Zeichnungen - insbesondere den dargestellten Geometrien und den relativen Abmessungen mehrerer Bauteile zueinander sowie deren relativer Anordnung und Wirkverbindung - zu entnehmen.

### KURZBESCHREIBUNG DER FIGUREN

Die Erfindung wird im Folgenden anhand eines konkreten Ausführungsbeispiels unter Bezugnahme auf die beigefügten Zeichnungen näher erläutert und beschrieben.
- **Fig. 1**: zeigt einen Längsschnitt durch einen Impaktor mit drei Impaktorstufen.
- **Fig. 2**: skizziert die Selektion der in einer Suspension enthaltenen Teilchen in einer der Impaktorstufen des Impaktors gemäß Fig. 1.
- **Fig. 3**: zeigt einen Schnitt durch eine Prallplatte mit einem Schwingquarz einer der Impaktorstufen des Impaktors gemäß einer Ausführungsform der Erfindung.
- **Fig. 4**: zeigt eine Draufsicht auf die Prallplatte gemäß Fig. 3.
- **Fig. 5**: skizziert die Antwort des Schwingquarzes einer Prallplatte des Impaktors einer Ausführungsform des Erfindung auf ein Sweep-Signal; und
- **Fig. 6**: zeigt die Frequenzverschiebung der Eigenfrequenz der Schwingquarze der drei Impaktorstufen des Impaktors gemäß einer Ausführungsform des Erfindung mit zunehmender Masse von auf ihnen aus einer Suspension abgeschiedenen Teilchen.

### FIGURENBESCHREIBUNG

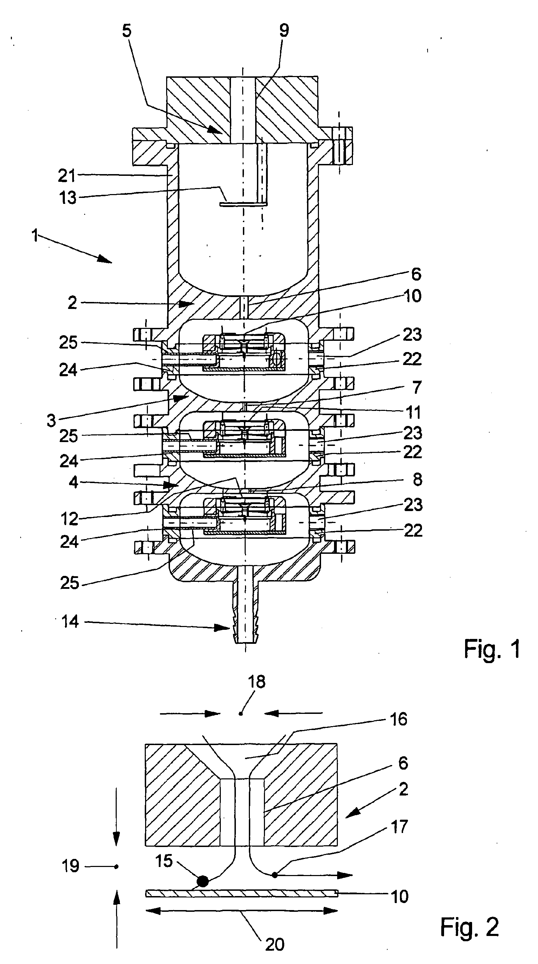

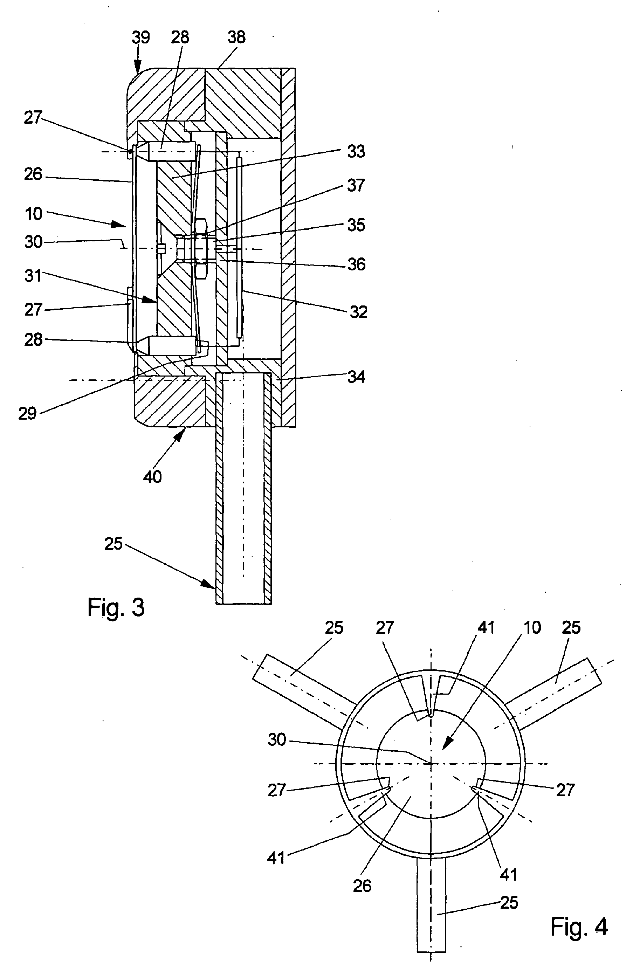

**Fig. 1** zeigt einen Impaktor 1, der als dreistufiger Kaskadenimpaktor mit Vorabscheider ausgebildet ist. Jede der Impaktorstufen 2 bis 4 und auch der Vorabscheider 5 umfasst jeweils eine Klassierdüse 6 bis 9, die auf eine Prallplatte 10 bis 13 gerichtet ist. Von einer Suspension aus einem Fluid, wie beispielsweise Luft, und darin suspendierten Teilchen, die über einen Ansaugstutzen 14 durch den Impaktor 1 gesaugt wird, scheiden sich auf den Prallplatten 10 bis 13 jeweils die Teilchen ab, die aufgrund ihrer Trägheit ihre von der vorgeschalteten Klassierdüse 6 bis 9 vorgegebene Richtung auf die Prallplatte 10 bis 13 hin beibehalten und nicht wie der Rest der Suspension der Prallplatte 10 bis 13 seitlich ausweichen können. Dies ist in **Fig. 2** skizziert, die exemplarisch und schematisch die Klassierdüse 6 der Impaktorstufe 2 und die ihr nachgeschaltete Prallplatte 10 zeigt. Ein großes schwereres Teilchen 15 aus einer durch die Klassierdüse 6 strömenden Suspension 16 gelangt auf die Prallplatte 10 und wird auf dieser abgeschieden, während ein kleines leichteres Teilchen 17 dem Rest der Suspension folgt und der Prallplatte 10 seitlich ausweicht. Die Abscheidegrenze jeder Impaktorstufe und auch des Vorabscheiders 9 wird durch den Durchmesser 18 der Klassierdüse 6, den Abstand 19 der Prallplatte 10 von der Klassierdüse 6 und den Durchmesser 20 der Prallplatte 10 sowie den Volumenstrom der Suspension 16 durch die Klassierdüse 6, der jedoch bei allen Klassierdüsen 6 bis 9 des Impaktors 1 gemäß Fig. 1 gleich ist, bestimmt. Da jeder der Impaktorstufen 2 bis 4 eine andere Impaktorstufe 3 oder 4 bzw. der Vorabscheider 5 vorgeschaltet ist, werden in jeder Impaktorstufe 2 bis 4 Teilchen einer Partikelklasse auf der Prallplatte 10 bis 12 abgeschieden, die durch eine obere und eine untere Abscheidegrenze definiert ist, wobei die obere Abscheidegrenze durch die vorgeschaltete Anordnung bestimmt wird. Es versteht sich, dass bei dem Impaktor 1 gemäß Fig. 1 der Durchmesser der Klassierdüsen von der Klassierdüse 9 des Vorabscheiders 5 über die Klassierdüsen 6 bis 8 der drei Impaktorstufen 2 bis 4 stetig abnimmt. Jede der Impaktorstufen 2 bis 4 und auch der Vorabscheider 5 ist in Form eines auswechselbaren Impaktormoduls ausgebildet, das zugleich den entsprechenden Abschnitt einer die Suspension führenden Wandung 21 des Impaktors 1 ausbildet. Während der Vorabscheider 5 und auch der Ansaugstutzen 14 jeweils durch ein einteiliges Impaktormodul ausgebildet werden, weisen die Impaktormodule der Impaktorstufen 2 jeweils eine Untereinheit, die die jeweilige Klassierdüse ausbildet, und eine Untereinheit, die die jeweilige Prallplatt umfasst, auf. Dabei sind die die Prallplatten umfassenden Teilmodule der Impaktorstufen 2 bis 4 identisch aufgebaut. Zumindest können sie identisch aufgebaut sein. Sie weisen jeweils die in den folgenden Fig. 3 und 4 gezeigte Konstruktion auf.

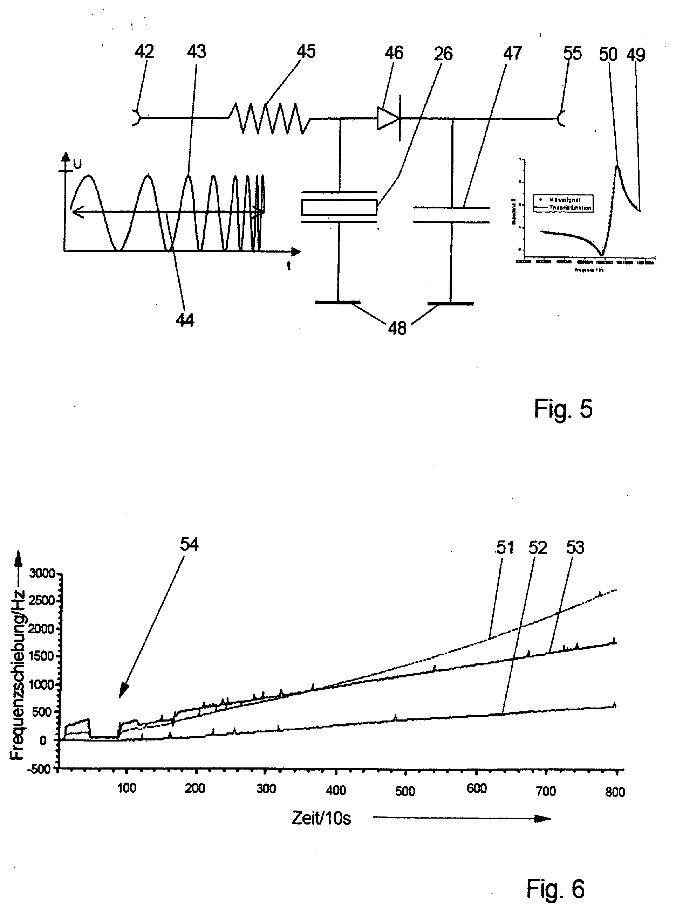

In den **Fig. 3 und 4** ist nicht die gesamte die Prallplatte 10 umfassende Untereinheit 22 des Impaktormoduls wiedergegeben, in deren Bereich die Wandung 21 einen Anschluss 23 beispielsweise zur Druckmessung und Durchbrechungen 24 zur Aufnahme von Halterohren 25 für die in den Fig. 3 und 4 gezeigte Teilanordnung umfasst. Diese Teilanordnung weist als Prallplatte 10 einen Schwingquarz 26 auf, der die Form einer typischerweise 0,1 bis 1 mm dicken, runden Scheibe hat. Gehalten wird der Schwingquarz in drei symmetrisch um seine Symmetrieachse 30 rotationssymmetrisch angeordneten Punkten durch flache Widerlager 27, die an der Oberfläche des Schwingquarzes 26 anliegen, und Halteelemente 28, die unterhalb der Widerlager 27 den Schwingquarz 26 elastisch abstützen. Die Elastizität der Abstützung beruht dabei auf einem die Halteelemente 28 beaufschlagenden Federblech 29. Der Schwingquarz 26 kann bei der hier beschriebenen Art seiner Lagerung ohne weiteres unterschiedliche Dicken aufweisen, ohne dass an dem in den Fig. 3 und 4 gezeigten Aufbau irgendetwas geändert werden müsste. Die Halteelemente 28 und die Widerlager 27 dienen zugleich zur elektrischen Kontaktierung des Schwingquarzes 26, um dessen Eigenfrequenz abzufragen. Diese Eigenfrequenz hängt von der Masse des Schwingquarzes 26 einschließlich der Masse der auf ihm abgeschiedenen Teilchen ab. Auf die Art der Abfrage der Eigenfrequenz des Schwingquarzes 26 wird im Zusammenhang mit Fig. 5 noch näher eingegangen werden. Die Widerlager 27 befinden sich wie der wesentliche Teil der in den Figuren 3 und 4 gezeigten Teilanordnung und das hier nicht wiedergegebene Gehäuse 21 des Impaktors 1 auf Erdpotential. Demgegenüber sind die Halteelemente 28 durch eine Isolierung 31 elektrisch isoliert und werden über eine elektrische Schaltung 32 mit einem Abfragesignal beaufschlagt. Konkret kann es sich bei den Halteelementen 28 um vergoldete Kontaktstifte handeln. Ein die Isolierung 31 ausbildender Isolierkörper 33 wird an einem Grundkörper 34 der Teilanordnung durch eine Halteschraube 35 gehalten, wobei die Schraube 35 in einen in den Grundkörper 34 eingebetteten Isolierkörper 36 eingreift, in dem ein Innengewinde ausgebildet ist. Die Abstützung des Isolierkörpers 33 auf der Schraube 35 und das Widerlager für das Federblech 29 wird von einer Mutter 37 auf der Schraube 35 gebildet. Die äußere Oberfläche 38 des Grundkörpers 34 ist ebenso wie die äußere Oberfläche 39 eines mit diesem verschraubten, die Widerlager 27 ausbildenden und ebenfalls aus Edelstahl bestehenden Halterings 40 poliert, um in dem Impaktor 1 gemäß Fig. 1 eine statische Aufladung durch die über die Oberflächen 38 und 39 strömende Suspension zu vermeiden. Die Widerlager 27 sind in Form flacher Haltenasen 41 ausgebildet, die die Überströmung der Prallplatte 10 durch das Fluid und die von diesem mitgeführten, auf der Prallplatte 10 nicht abgelagerten Teilchen möglichst wenig behindert. Die Haltenasen 41 bauen nur in der Größenordnung von 0,2 mm über der Oberfläche des Schwingquarzes auf. Durch die Anordnung der elektrischen Schaltung 32 an dem Grundkörper 34 sind die Wege, d. h. die elektrischen Leitungen zu dem Schwingquarz 26 bzw. von diesem zu der elektrischen Schaltung 32 nur kurz, wodurch die Gefahr des Einfangens von Störungen minimiert ist. Eine elektrische Kontaktierung der elektrischen Schaltung 32 von außen erfolgt durch die Halterohre 25. Diese können auch neben den Anschluss 23 für eine Vakuummessung oder eine Temperaturmessung mittels eines hindurch geführten Thermoelements genutzt werden. In die elektrische Schaltung 32 sind vorzugsweise Signalfilter integriert, so dass das von der elektrischen Schaltung 32 nach außen abgegebene Messsignal bereits soweit aufbereitet ist, dass es weitestgehend störungsunempfindlich ist.

In **Fig. 5** ist skizziert, wie die Eigenfrequenz des Schwingquarzes 26 abgefragt werden kann. Hierzu wird an einen Eingang 42, typischerweise von außerhalb des Impaktors 1 gemäß der Erfindung, ein sogenanntes Sweep-Signal 43 angelegt, dessen Spannungsverlauf über der Zeit links in Fig. 5 skizziert ist. Das Sweep-Signal 43 weist eine Dauer 44 von beispielsweise 5 ms auf und deckt bei einer sinusförmigen Grundform mit einer Amplitude von 10 V einen Frequenzbereich von beispielsweise 9,990 bis 10,002 MHz ab, um die Eigenfrequenz eines Schwingquarzes 26 abzufragen, die in diesem Frequenzbereich liegt. Die in Fig. 5 skizzierte Abfrageanordnung umfasst hinter dem Eingang 42 einen Widerstand 45 von hier 1 kΩ. Anschließend erfolgt eine Verzweigung zu dem Schwingquarz 26, und nach einer Diode 46, hier einer D_{AA119}, eine Verzweigung zu einem Kondensator 47 von hier 1,6 nF. Sowohl der Schwingquarz 26 als auch der Kondensator 47 sind rückwärtig mit der Erde 48 kontaktiert. Bei dieser Anordnung ergibt sich für das in Fig. 5 links dargestellte Sweep-Signal 43 das in Fig. 5 rechts dargestellte Antwortsignal 49 an dem Ausgang 55, das bei der Eigenfrequenz des Schwingquarzes 26 eine Resonanzerhöhung 50 aufweist. Konkret ist im rechten Teilbild von Fig. 5 der Impedanzverlauf des Sweep-Signals aufgezeichnet (Punkte). Die Linie ist ein Theorie-Fit für das elektronische Ersatzschaltbild des Aufbaus, welches die Quarzhalterung und elektronische Beschaltung mit einbezieht. Die gute Übereinstimmung zeigt, dass sich das elektronische Gesamtsystem Quarzwaage-Impaktor in einem wohldefinierten Zustand befindet. Aus der genauen Lage der Resonanzerhöhung 50 in Bezug auf den zeitlichen Verlauf des Sweep-Signals 43 ist die genaue Eigenfrequenz des Schwingquarzes bestimmbar. Hieraus kann wiederum die aktuelle Masse des Schwingquarzes bzw. die Masse der auf ihm abgeschiedenen Teilchen exakt bestimmt werden. Die einzelnen Impaktorstufen 2 bis 4 des Impaktors 1 gemäß Fig. 1 können mit dem Sweep-Signal 43 nacheinander im Multiplexverfahren abgefragt werden. Aufgrund der nur sehr kurzen Dauer des Sweep-Signals 43 resultiert hieraus immer noch eine quasi kontinuierliche Überwachung der Eigenfrequenz des in jede Prallplatte 10-12 integrierten Schwingquarzes 26 bzw. der Masse der auf der jeweiligen Prallplatte 10-12 abgeschiedenen Teilchen.

**Fig. 6** skizziert die Frequenzverschiebung für die Eigenfrequenz von drei hintereinander geschalteten Impaktorstufen, wobei der Frequenzverlauf 51 der ersten Impaktorstufe 2, der Frequenzverlauf 52 der zweiten Impaktorstufe 3 und der Frequenzverlauf 53 der dritten Impaktorstufe 4 entspricht. Dabei wurde dem Impaktor 1 gemäß der Erfindung eine Suspension mit weitgehend konstanter Zusammensetzung zugeführt, und die einzelnen Impaktorstufen 2 bis 4 waren so ausgelegt, dass in der ersten Impaktorstufe 2 Teilchen einer Größe von etwa 2 µm, in der zweiten Impaktorstufe 3 Teilchen mit einer Größe von 0,5 µm und in der dritten Impaktorstufe 4 Teilchen mit einer Größe von ungefähr 0,2 µm auf der jeweiligen Prallplatten 10 bis 12 abgeschieden wurden. Zu einem Zeitpunkt 54 wurden die Eigenfrequenzen der einzelnen Schwingquarze zu null gesetzt, und anschließend ist die nach dem Nullsetzen erfolgte Frequenzverschiebung aufgezeichnet. Es ist zu erkennen, dass sich bereits nach vergleichsweise kurzer Zeit von wenigen 10 sek. ein konstanter Trend bei der Veränderung der Eigenfrequenz bei jedem der Frequenzverläufe 51 bis 53 zeigt. Aus jedem Frequenzverlauf 51 bis 53 kann sehr genau auf die aktuelle Konzentration der Teilchen der entsprechenden Partikelklasse in der gemessenen Suspension geschlossen werden. Die absolute Frequenzverschiebung ermöglicht es, die Gesamtbeladung der jeweiligen Suspension mit den Teilchen der jeweiligen Partikelklasse zu bestimmen.

### BEZUGSZEICHENLISTE

- 1: Impaktor
- 2: Impaktorstufe
- 3: Impaktorstufe
- 4: Impaktorstufe
- 5: Vorabscheider
- 6: Klassierdüse
- 7: Klassierdüse
- 8: Klassierdüse
- 9: Klassierdüse
- 10: Prallplatte

- 11: Prallplatte
- 12: Prallplatte
- 13: Prallplatte
- 14: Absaugstutzen
- 15: Teilchen
- 16: Suspension
- 17: Teilchen
- 18: Durchmesser
- 19: Abstand
- 20: Durchmesser

- 21: Wandung
- 22: Teilmodul
- 23: Anschluss
- 24: Durchbrechung
- 25: Halterohr
- 26: Schwingquarz
- 27: Widerlager
- 28: Halteelement
- 29: Federblech
- 30: Achse

- 31: Isolierung
- 32: elektronische Schaltung
- 33: Isolierkörper
- 34: Grundkörper
- 35: Schraube
- 36: Isolierkörper
- 37: Mutter
- 38: Oberfläche
- 39: Oberfläche
- 40: Haltering

- 41: Haltenase
- 42: Eingang
- 43: Sweep-Signal
- 44: Dauer
- 45: Widerstand

- 46: Diode
- 47: Kondensator
- 48: Erde
- 49: Antwortsignal
- 50: Resonanzüberhöhung

- 51: Frequenzverlauf
- 52: Frequenzverlauf
- 53: Frequenzverlauf
- 54: Zeitpunkt
- 55: Ausgang

## Patentansprüche

1. Impaktor (1) mit einer Prallplatte (10-13) und einer auf die Prallplatte (10-13) gerichteten Klassierdüse (6-9), wobei die Prallplattle (10-13) aus einer Suspension, die aus in einem Fluid suspendierten Teilchen besteht und die aus der Klassierdüse (6-9) auf die Prallplatte (10-13) hin austritt, diejenigen Teilchen auffängt, die zu einer bestimmten Partikelklasse gehören, wobei die Prallplatte (10, 11, 12) einen Schwingquarz (26) aufweist, mit dem Ihre Masseänderung aufgrund der aufgefangenen Teilchen (15) in situ messbar ist, **dadurch gekennzeichnet, dass** der Schwingquarz (26) In einzelnen Punkten an seinem Rand mit fedemd abgestützten Halteeiementen (28) gegen ortsfeste Widerlager (27) gehalten wird. und **durch gekennzeichnet, dass** der Schwingquarz (28) In drei um seine normale Symmstrieachse (30) rotationssymmetrisch zueinander angeordneten Punkten gehalten wird.

2. Impaktor nach Anspruch 1, **dadurch gekennzeichnet, dass** die Prallplatte (10, 11, 12) aus dem Schwingquarz (26) besteht.

3. Impaktor nach Anspruch 1 oder 2, **dadurch gekennzeichnet, dass** der Schwingquarz (26) scheibenförmig ist und mit seiner normalen Symmetrieachse (30) auf die Klassierdüse (6, 7, 8) ausgerichtet ist.

4. Impaktor nach einem der Ansprüche 1 bis 3, **dadurch gekennzeichnet, dass** eine Messeinrichtung vorgesehen ist, die eine Eigenfrequenz des Schwingquarzes (26) mit einem Abfragesignal (43) ausliest, das eine sich ändernde Frequenz aufweist und mit dem der Schwingquarz elektrisch angeregt wird.

5. Impaktor nach Anspruch 4, **dadurch gekennzeichnet dass** die Messeinrichtung die Eigenfrequenz des Schwingquarzes (26) oder eine Änderung dieser Eigenfrequenz oder die entsprechende Masseänderung fortlaufend aufzeichnet und in Bezug auf plötzliche Masseverringerungen korrigiert.

6. Impaktor nach einem der Ansprüche 1 bis 5, **dadurch gekennzeichnet, dass** mehrene Impaktorstufen (2, 3, 4) mit jeweils einer Klassierdüse (6, 7, 8) und einer einen Schwingquarz (26) aufweisenden Prallplatte (10, 11, 12) vorgesehen sind, wobei die Impaktorstufen (2, 3, 4) miteinander in Reihe geschaltet sind und wobei die Prallplatten (10, 11, 12) der verschiedenen Impaktorstufen (2, 3, 4) für das Auffangen von Teilchen (15) verschiedener Partikelklassen vorgesehen sind.

7. Impaktor nach Anspruch 6, **dadurch gekennzeichnet, dass** jede Impaktorstufe (2, 3, 4) als ein auswechselbares Impaktormodul ausgebildet ist.

8. Impaktor nach Anspruch 7, **dadurch gekennzeichnet, dass** jedes auswechselbare Impaktormodul einen Abschnitt einer die Suspension (16) führenden Wandung (21) des Impaktors ausbildet.

## Claims

1. Impactor (1) having an impactor plate (10-13) and a classifying nozzle (6-12), wherein the impactor plate (10-13) collects those particles belonging to a certain particle class from a suspension which consists of particles suspended in a fluid and which escapes from the classifying nozzle (6-12) towards the impactor plate (10-13), wherein the impactor plate (10, 11, 12) comprises an oscillating crystal (26) by which the change in mass of the impactor plate due to the collected particles (15) is measurable in situ, **characterized in that** the oscillating crystal (26) is held in single points at its boundary against fixed counter bearings (27) by means of elastically supported holding elements (28), and **characterized in that** the oscillating crystal (26) is held in three points rotation-symmetrically arranged about its normal symmetry axis (30).

2. Impactor of claim 1, **characterized in that** the impactor plate (10, 11, 12) consists of the oscillating crystal (26).

3. Impactor of claim 1 or 2, **characterized in that** the oscillating crystal (26) is disc-shaped and oriented towards the classifying nozzle (6, 7, 8) with its normal symmetry axis (30).

4. Impactor of any of the claims 1 to 3, **characterized in that** a measuring device is provided which reads an eigenfrequency of the oscillating crystal (26) by means of an interrogating signal (43) which has a changing frequency and by which the oscillating crystal is activated electrically.

5. Impactor of claim 4, **characterized in that** the measuring device continually records the eigenfrequency of the oscillating crystal (26) or a change in this eigenfrequency or the corresponding change in mass and makes corrections for sudden reductions in mass.

6. Impactor of any of the claims 1 to 5, **characterized in that** several impactor stages (2, 3, 4) each having a classififying nozzle (6, 7, 8) and an impactor plate (10, 11, 12) including a oscillating crystal (26) are provided, wherein the impactor stages (2, 3, 4) are arranged in series, and wherein the impactor plates (10, 11, 12) of the different impactor stages (2, 3, 4) are provided for collecting particles (15) of different particle classes.

7. Impactor of claim 6, **characterized in that** each impactor stage (2, 3, 4) is made as an interchangeable impactor module.

8. Impactor of claim 7, **characterized in that** each interchangeable impactor module forms a section of a wall (21) of the impactor guiding the suspension (16).

## Revendications

1. Impacteur (1) avec une plaque d'impact (10-13) et buse de classification (6-8) dirigée vers la plaque d'impact (10-13), dans lequel la plaque d'impact (10-13) capture, d'une suspension constituée de particules en suspension dans un fluide et qui sort de la buse de classification (6-8) sur la plaque d'impact (10-13), les particules appartenant à une certaine classe de particules, la plaque d'impact (10, 11, 12) présentant un quartz oscillateur (26) au moyen duquel sa variation de masse peut être mesurée in situ suite aux particules capturées, **caractérisé en ce que** le quartz oscillateur (26) est maintenu en des points individuels sur un bord avec des éléments de maintien (28) qui s'appuient élastiquement contre des butées fixes (27) et **en ce que** le quartz oscillateur (26) est maintenu en trois points disposés symétriquement en rotation les uns par rapport aux autres autour de son axe de symétrie normal (30).

2. Impacteur selon la revendication 1, **caractérisé en ce que** la plaque d'impact (10, 11, 12) est constituée par le quartz oscillateur (26).

3. Impacteur selon la revendication 1 ou 2, **caractérisé en ce que** le quartz oscillateur (26) est en forme de disque et est dirigé, avec son axe de symétrie normal (30), vers la buse de classification (6, 7, 8).

4. Impacteur selon l'une des revendications 1 à 3, **caractérisé en ce qu'**il est prévu un dispositif de mesure qui émet une fréquence propre du quartz oscillateur (26) avec un signal d'interrogation (43) présentant une fréquence qui varie et par lequel le quartz oscillateur (26) est excité.

5. Impacteur selon la revendication 4, **caractérisé en ce que** le dispositif de mesure enregistre en continu la fréquence propre du quartz oscillateur (26) ou une variation de cette fréquence propre ou une variation de masse correspondante et corrige en fonction d'une variation brutale de masse.

6. Impacteur selon l'une des revendications 1 à 3, **caractérisé en ce qu'**il est prévu plusieurs étages d'impacteurs (2, 3, 4) pourvus chacun d'une buse de classification (6, 7, 8) et d'une plaque d'impact (10, 11, 12) présentant un quartz oscillateur (26), les étages d'impacteurs (2, 3, 4) étant reliés entre eux en série et les plaque d'impact (10, 11, 12) des différents étages d'impacteurs (2, 3, 4) sont prévus, pour la capture des particules (15), pour différentes classes de particules.

7. Impacteur selon la revendication 6, **caractérisé en ce que** chaque étage d'impacteurs (2, 3, 4) est configuré comme module d'impacteur interchangeable.

8. Impacteur selon la revendication 7, **caractérisé en ce que** chaque module d'impacteur interchangeable constitue une section d'une paroi (21) guidant la suspension (16).
